(19) **Europäisches Patentamt / European Patent Office / Office européen des brevets**

(11) **EP 4 571 539 A1**

(12) **EUROPEAN PATENT APPLICATION**
published in accordance with Art. 153(4) EPC

(43) Date of publication:
**18.06.2025  Bulletin 2025/25**

(21) Application number: **23857266.3**

(22) Date of filing: **16.08.2023**

(51) International Patent Classification (IPC):
***G06F 18/2115*** *(2023.01)*

(52) Cooperative Patent Classification (CPC):
**G06F 17/18; G06F 18/2115**

(86) International application number:
**PCT/JP2023/029601**

(87) International publication number:
**WO 2024/043153 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.08.2022  JP 2022131699**

(71) Applicant: **Mitsubishi Heavy Industries Thermal Systems, Ltd.**
 Tokyo 100-8332 (JP)

(72) Inventors:
 • **NISHIKAWA Naoki**
 **Tokyo 100-8332 (JP)**
 • **KUROIWA Toru**
 **Tokyo 100-8332 (JP)**

(74) Representative: **Cabinet Beau de Loménie**
 **158, rue de l'Université**
 **75340 Paris Cedex 07 (FR)**

(54) **FACTOR SELECTION DEVICE, FACTOR SELECTION METHOD, AND PROGRAM**

(57)     Provided is a method for narrowing down factors that are used in state evaluation. This factor selection device comprises: a data acquisition unit that acquires candidates for factors that are used in assessing an object; an evaluation unit that evaluates the magnitude of impact upon assessment with regard to each factor; and a factor selection unit that, on the basis of the result of evaluation from the evaluation unit, selects a factor having a high impact upon the assessment. The evaluation unit selects one unevaluated factor from among the candidates, performs an assessment excluding the factor, and evaluates the accuracy of the assessment. If there is a change in the accuracy of assessment, an evaluation process to evaluate the relevant factor as an impacting factor is repeatedly executed for each of the candidate factors, and the factor selection unit selects a remaining factor.

FIG. 1

EP 4 571 539 A1

**Description**

Technical Field

The present disclosure relates to a factor selection device, a factor selection method, and a program. The present disclosure claims priority based on Japanese Patent Application No. 2022-131699 filed in Japan on August 22, 2022, the contents of which are incorporated herein by reference.

Background Art

A Mahalanobis Taguchi method (MT method) is known as a method of detecting an abnormality. In the MT method, a Mahalanobis distance is calculated from a plurality of factors, and the calculated Mahalanobis distance is compared with a predetermined threshold value to determine an abnormality of a device or the like. In order to improve accuracy of the abnormality detection, it is necessary to appropriately select a factor (variable) used for calculating the Mahalanobis distance. For example, PTL 1 discloses a method of calculating a combination of "adoption number of variables" and "threshold value" for improving detection accuracy of the MT method. PTL 2 discloses a method (analysis of factorial effect) of quantitatively analyzing which factor impacts on the Mahalanobis distance. In this method, factors to be evaluated are allocated to a two-level orthogonal array, a signal-to-noise (SN) ratio is calculated for each row of the orthogonal array, for each factor, an SN ratio gain, which is a difference in the SN ratio between a case where the factor is used and a case where the factor is not used, is obtained, and a factor that has a large impact on the abnormality detection is specified based on the SN ratio gain. In PTL 2, it is suggested that the factor of which the SN ratio gain indicates a larger value is more likely to cause an occurrence of the abnormality. As disclosed in PTL 2, in a case where the factors are arranged in ascending order of the SN ratio gain, it is common practice to select a factor positioned at the top in the arrangement as the factor used for calculating the Mahalanobis distance. In a case where the abnormality detection is performed by the MT method, the smaller the number of factors used for calculating the Mahalanobis distance, the more various costs (for example, a calculation amount or a storage capacity for storing data of the factors) can be reduced. Therefore, it is desirable to reduce the number of factors as much as possible as long as the accuracy of the abnormality detection can be maintained.

Citation List

Patent Literature

[PTL 1] Japanese Unexamined Patent Application Publication No. 2008-117380
[PTL 2] Japanese Unexamined Patent Application Publication No. 2009-243428

Summary of Invention

Technical Problem

Meanwhile, in a method of selecting a factor by paying attention only to a magnitude of the SN ratio gain, which is generally performed, it may not be possible to sufficiently reduce the number of factors.

The present disclosure provides a factor selection device, a factor selection method, and a program capable of solving the above-described problems.

Solution to Problem

A factor selection device of the present disclosure includes a data acquisition unit that acquires candidates for factors used for a state evaluation of an object, an evaluation unit that evaluates a magnitude of an impact on the state evaluation for each of the candidates, and a factor selection unit that selects a factor having a large impact from among the candidates based on an evaluation result of the evaluation unit, in which the evaluation unit selects one un-evaluated factor among the candidates, performs the state evaluation excluding the factor, and in a case where there is a change in accuracy of the state evaluation before and after excluding the factor, repeatedly executes an evaluation process for evaluating the factor as the factor having a large impact for each of the candidates, and the factor selection unit selects the factor evaluated as having a large impact.

A factor selection method of the present disclosure includes a step of acquiring candidates for factors used for a state evaluation of an object, a step of evaluating a magnitude of an impact on the state evaluation for each of the candidates, and a step of selecting a factor having a large impact from among the candidates based on an evaluation result of the step of evaluating, in which in the step of evaluating, one un-evaluated factor among the candidates is selected, the state evaluation is performed excluding the factor, and in a case where there is a change in accuracy of the state evaluation before and after excluding the factor, an evaluation process for evaluating the factor as the factor having a large impact is repeatedly executed for each of the candidates, and, in the step of selecting, the factor evaluated as having a large impact is selected.

A program of the present disclosure causes a computer to execute a process including a step of acquiring candidates for factors used for a state evaluation of an object, a step of evaluating a magnitude of an impact on the state evaluation for each of the candidates, and a step of selecting a factor having a large impact from among the candidates based on an evaluation result of the step of evaluating, in which in the step of evaluating, one un-evaluated factor among the candidates is selected, the state evaluation is performed excluding the factor, and in a case where there is a change in accuracy of the state evaluation before and after excluding the factor, an evaluation process for evaluating the factor as the factor having a large impact is repeatedly executed for each of the candidates, and, in the step of selecting, the factor evaluated as having a large impact is selected.

Advantageous Effects of Invention

According to the factor selection device, the factor selection method, and the program, it is possible to reduce factors used for abnormality detection and the like. Brief Description of Drawings

Fig. 1 is a block diagram showing an example of a factor selection device according to an embodiment.
Fig. 2 is a flowchart showing an example of a factor selection process according to the embodiment.
Fig. 3 is a diagram showing an example of an orthogonal array and an SN ratio according to the embodiment.
Fig. 4 is a diagram showing an example of a factorial effect diagram according to the embodiment.
Fig. 5 is a diagram showing a general selection method of a factor.
Fig. 6 is a flowchart showing an example of an evaluation process of a factor according to the embodiment.
Fig. 7 is a diagram showing an example of a factor selected by the factor selection process according to the embodiment.
Fig. 8 is a diagram showing an example of a hardware configuration of the factor selection device according to the embodiment.

Description of Embodiments

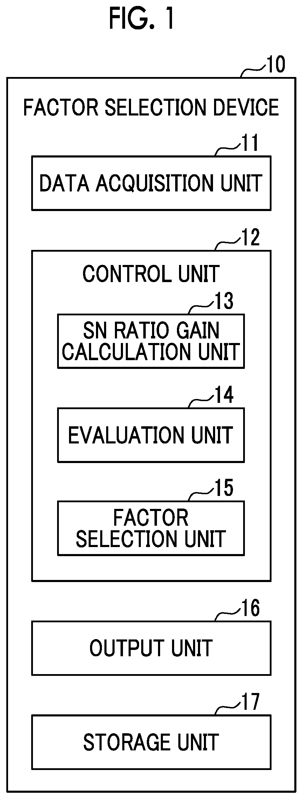

Hereinafter, a factor selection method of the present disclosure will be described with reference to Figs. 1 to 8.

(Configuration of Factor Selection Device)

Fig. 1 is a block diagram showing an example of a factor selection device according to an embodiment. A factor selection device 10 selects a factor that works effectively from among candidates for factors (also referred to as explanatory variables, feature quantities, and the like) used for monitoring or state evaluation of a device, a plant, or the like. The selected factor is used in a process such as abnormality detection executed by a monitoring device, a control device, or the like. The number of measurement items used for state evaluation of a plant or the like may be several hundred or more. However, in order to perform state evaluation with high accuracy, it is desirable to exclude items that are not related to the state evaluation or that deteriorate evaluation accuracy and to select and use only important items, instead of using all the items. In a case where the factors to be used can be reduced while maintaining high evaluation accuracy, it is possible to expect not only a reduction in processing cost (calculation load, data storage capacity, and the like) of the state evaluation but also in installation cost and maintenance cost of sensors due to a reduction in the number of sensors with low importance.

As shown in the drawing, the factor selection device 10 includes a data acquisition unit 11, a control unit 12, an output unit 16, and a storage unit 17.

The data acquisition unit 11 acquires candidates for factors used for state evaluation of a device, a plant, or the like (object). The state evaluation is, for example, diagnosis of an operation state such as a normal state, an abnormal state, or a state in which caution is required, abnormality detection of detecting that an abnormality has occurred, and abnormality prediction of predicting occurrence of an abnormality in advance. The factor is a physical quantity that is considered to reflect a state of an object, such as a measurement value measured by a sensor, such as a temperature, a pressure, a flow rate, a frequency, a rotation speed, a current, and a voltage, or a value calculated from the measurement value, and process data of a monitoring target.

The control unit 12 controls a process of selecting an important factor from among the candidates for the factors. The control unit 12 includes an SN ratio gain calculation unit 13, an evaluation unit 14, and a factor selection unit 15.

The SN ratio gain calculation unit 13 calculates an SN ratio gain of each factor serving as a candidate. A calculation method of the SN ratio gain is known (for example, PTL 2). Therefore, the detailed description will be omitted in the present specification.

The evaluation unit 14 evaluates how important each factor is for the state evaluation, in other words, how much impact each factor has on the state evaluation. Specifically, the evaluation unit 14 selects one factor in ascending order of the SN ratio gain from among the factors serving as the candidates and performs the state evaluation excluding the factor. The evaluation unit 14 determines whether or not there is a significant change in the evaluation accuracy before and after excluding the factor. For example, in a case where there is a change equal to or greater than a predetermined threshold value in the evaluation accuracy, it is determined that the factor is an important factor that impacts on the determination, that is, a valid factor, and in a case where only a change less than the threshold value is recognized, it is determined that the factor is an invalid factor that does not impact on the state evaluation even in a case where the factor is present or not, and the factor is deleted from among the candidates. The evaluation unit 14 executes the evaluation process for each factor and leaves only the important factor.

The factor selection unit 15 selects the factor evaluated as important by the evaluation unit 14.

The output unit 16 outputs the factor selected by the factor selection unit 15 to a display device or an electronic file.

The storage unit 17 stores data of the factor acquired by the data acquisition unit 11, various threshold values, various data being processed, and the like.

(Operation)

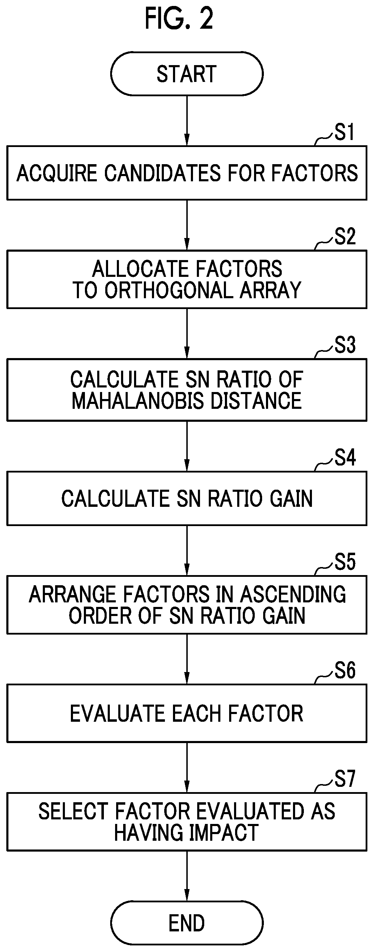

Next, a procedure of the factor selection process will be described with reference to Fig. 2.

Fig. 2 is a flowchart showing an example of a factor selection process according to the embodiment.

First, the data acquisition unit 11 acquires the candidates for the factors (step S1). For example, the data acquisition unit 11 acquires a plurality of sets of time-series data of various factors, such as a temperature, a pressure, and a flow rate collected in a time zone in which an abnormality has occurred in a plant or the like, and of time-series data of the same factors collected in a time zone in which the plant or the like is operating in a normal state. These time-series data are acquired in a state where it is found whether the data is data during abnormality or data during normality. Alternatively, the data acquisition unit 11 acquires time-series data of each factor over a predetermined period (for example, several weeks, several months, and the like) including the occurrence of the abnormality (occurrence of the abnormality is found). The data acquisition unit 11 records the acquired time-series data of the various factors (candidates for factors) in the storage unit 17.

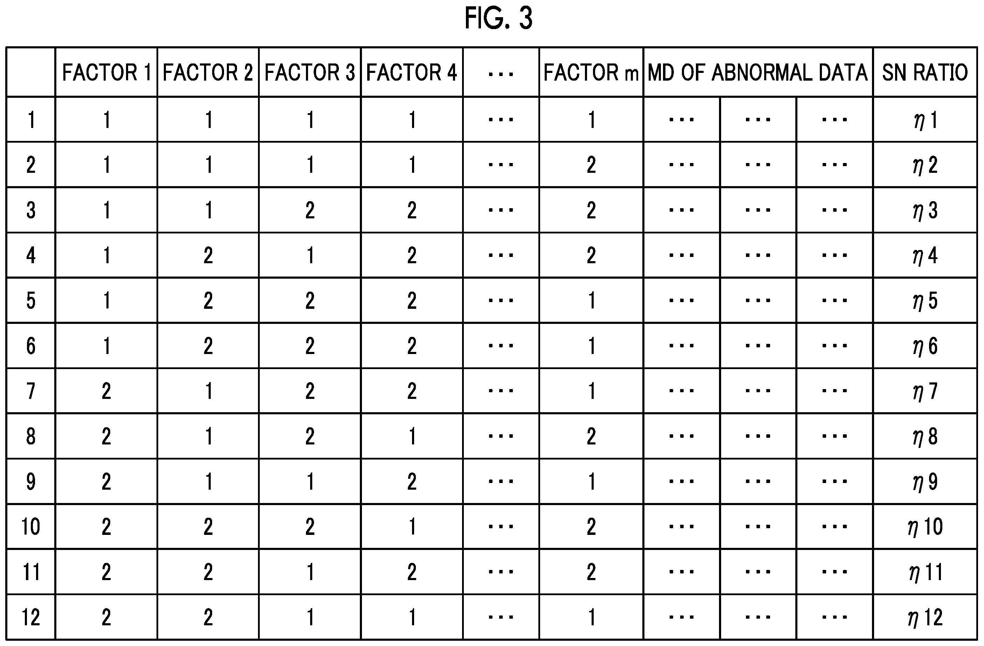

Next, in a case where the execution of the factor selection process is instructed by the operation of the user, the control unit 12 executes the following processes. First, the SN ratio gain calculation unit 13 allocates the factors to the orthogonal array (step S2). Fig. 3 shows an example of a two-level orthogonal array. Each column of the orthogonal array shown in Fig. 3 is called an item, and any of the factors serving as the candidate is allocated to each item. A value that each item can take is referred to as a level, and in a case of a two-level system, each item takes a value of either "using the item" (first level) or "not using the item" (second level). For values of 1 and 2 of each cell of the orthogonal array, 1 means "using the item" and 2 means "not using the item". In the present embodiment, each row of the orthogonal array is a number (experimental number of design of experiments) allocated to each combination of the factors serving as the candidates. For example, the first row of the orthogonal array of Fig. 3 shows combinations in a case where all of factors 1 to m are used.

Next, the SN ratio gain calculation unit 13 calculates the SN ratio of the Mahalanobis distance (MD) using the data collected at the time of the abnormality of each factor acquired in step S1 (step S3).

The SN ratio gain calculation unit 13 calculates the SN ratio according to Equation (1).

$$\eta = -10 \cdot \log\{(1/D_1{}^2 + 1/D_2{}^2 + ... + 1/D_m{}^2)/m\} \ ... \ (1)$$

Here, $D_x{}^2$ ($x = 1$ to $m$) is a square of the Mahalanobis distance (MD), and $m$ is the number of abnormal data. The SN ratio gain calculation unit 13 calculates SN ratios $\eta 1$ to $\eta 12$ of each row of the orthogonal array of Fig. 3 by using Equation (1).

Next, the SN ratio gain calculation unit 13 calculates the SN ratio gain (step S4). For example, the SN ratio gain calculation unit 13 calculates the SN ratio gain of a certain factor by a difference between an average value of the SN ratios at the first level and an average value of the SN ratios at the second level among the SN ratios calculated for the factor. For example, the SN ratio gain of the factor 1 is calculated by Equation (2).

$$\text{SN ratio gain of factor } 1 = ((\eta 1 + \eta 2 + \eta 3 + \eta 4 + \eta 5 + \eta 6) \div 6) - ((\eta 7 + \eta 8 +$$

$$\eta 9 + \eta 10 + \eta 11 + \eta 12) \div 6) \ ... \ (2)$$

Here, $\eta 1$ to $\eta 6$ are SN ratios calculated for rows in which the factor 1 is at the first level, and $\eta 7$ to $\eta 12$ are SN ratios calculated for rows in which the factor 1 is at the second level. In the same manner, the SN ratio gain calculation unit 13 calculates the SN ratio gains for other factors. The SN ratio gain calculation unit 13 records the calculated SN ratio gain in the storage unit 17.

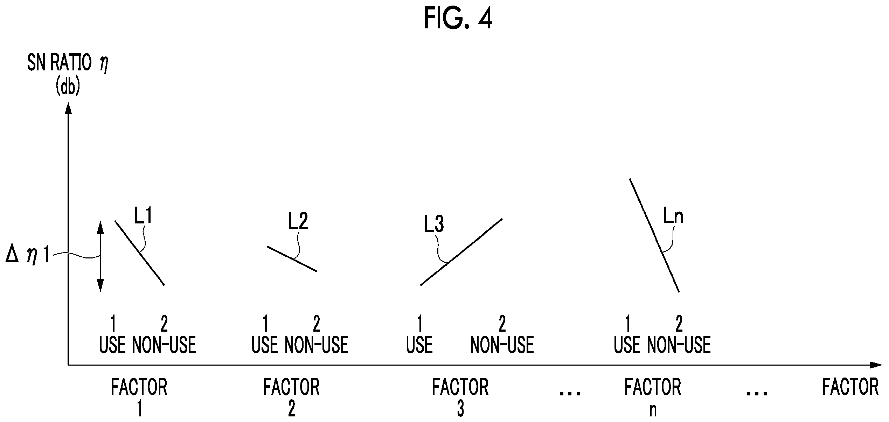

Fig. 4 shows a factorial effect diagram. In Fig. 4, the vertical axis represents the SN ratio, and the horizontal axis represents the factor. As described above, in a case of the factor 1, the difference ($\Delta\eta 1$ shown in the drawing) between the average of the SN ratios at the first level and the average of the SN ratios at the second level is the SN ratio gain. In a case where a line connecting the first level and the second level is represented by L1 for the factor 1 and a line for the other factor n is represented by Ln, the SN ratio gain is positive in a case where the slope is falling to the right as in L1, and in a case where the slope is steep (absolute value of the SN ratio gain is large), the slope indicates that the factor 1 is an important factor that impacts on the state evaluation. As in a factor 2, in a case where the slope is small even though the SN ratio gain is positive (absolute value of the SN ratio gain is small), this indicates that the factor 2 is a factor having a small impact on the determination of the state evaluation. In a case where the SN ratio gain is negative as in a factor 3, this indicates that the factor 3 is a factor ineffective for the state evaluation.

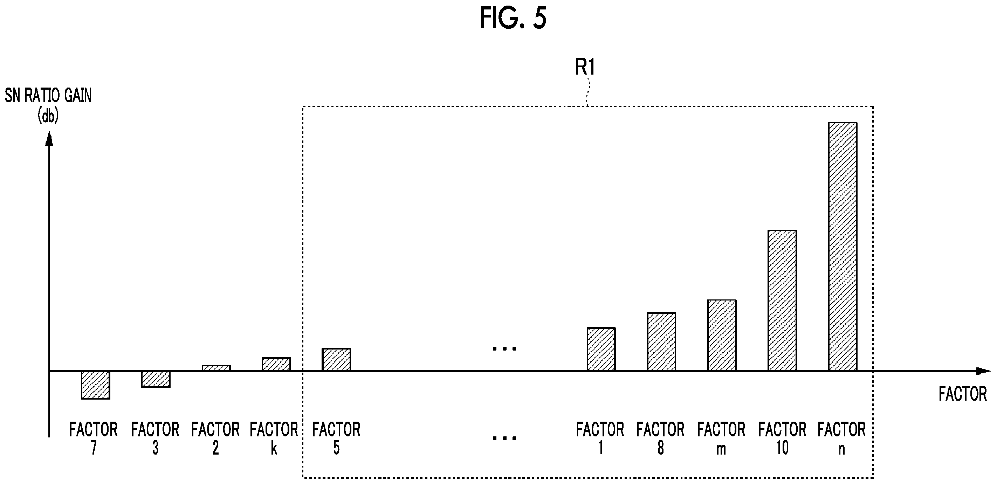

Next, the control unit 12 arranges the factors in ascending order of the SN ratio gain (step S5). Fig. 5 shows the results of arranging the factors serving as the candidates in ascending order of the SN ratio gain. In Fig. 5, the vertical axis represents the SN ratio gain, and the horizontal axis represents the factor. The further to the right, the larger the value of the SN ratio gain of the factor. As described using the factorial effect diagram in Fig. 4, in a case where the SN ratio gain is positive and the absolute value thereof is large, it is known that the factor is a factor that is effective for the state evaluation. Therefore, in general, the important factor that is effective for the determination is selected by a method of selecting the remaining factors by deleting the predetermined number of factors in order from a factor in which the value of the SN ratio gain is small, selecting a factor in which the value of the SN ratio gain is equal to or greater than a predetermined threshold value, and selecting X% of the factors in order from a factor in which the value of the SN ratio gain is large. In any case, the top factor with a large value of the SN ratio gain remains, and for example, the factor included in a range R1 in Fig. 5 is selected as the important factor. Meanwhile, there is a question as to whether or not all the factors included in the range R1 selected in this way are really effective for the state evaluation. One reason for this is that the value of the SN ratio gain is merely the result of approximately analyzing the degree of impact of each factor from the purpose of the design of experiments that is intended to comprehensively perform experiments in a small number of times efficiently. Another important point is that, for example, in a case where a factor 7 having the smallest SN ratio gain in Fig. 5 is removed, and the SN ratio gains are calculated again with the remaining factors and the factors are rearranged in ascending order, the order of magnitude is not necessarily the same as the order in Fig. 5 (for example, a factor 5 in the range R1 is in a lower order, or the like). This is because there is a correlation or interaction between the factors. As described above, the SN ratio gain is meaningful only in a combination of N factors, and the order of the factors is not necessarily the same as before deletion in a combination of the remaining factors in which the factor having a smallest SN ratio gain is deleted. Therefore, in the present embodiment, the aim is to extract only the factors that are really useful for the state evaluation and to reduce the number of factors as much as possible while ensuring the accuracy of the state evaluation. For this purpose, in the next step, the evaluation unit 14 individually evaluates the degree of impact and the importance of each factor (step S6).

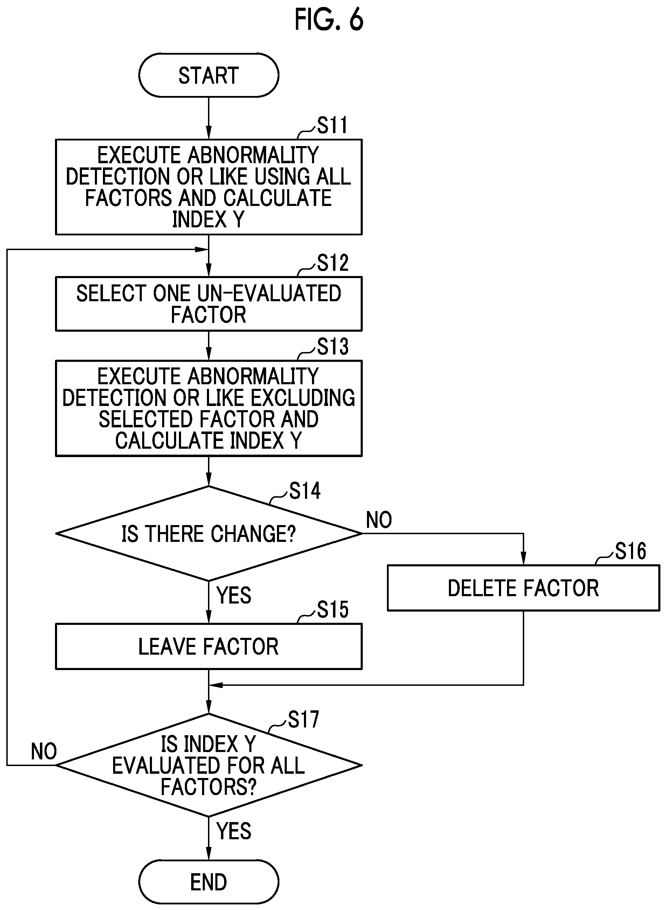

Fig. 6 shows an example of the processing content of the evaluation process (step S6) by the evaluation unit 14. First, the evaluation unit 14 executes the abnormality detection and the like using all the factors of the time-series data acquired in step S11 and calculates an index Y (step S11). Here, the index Y is an index related to the accuracy of the abnormality detection, and for the index Y, for example, an erroneous determination rate of the abnormality detection (ratio of the abnormality missing or the false alarm) or the number of days of advance prediction (how long ago the abnormality could be detected) can be used. The evaluation unit 14 has a function of performing abnormality detection or abnormality prediction, acquires the time-series data of each factor acquired in step S1, performs abnormality detection or abnormality prediction, and calculates the index Y. Since the data acquired in step S1 includes data found to be during normality or abnormality (time-series data of each factor collected in a case where an abnormality occurs or time-series data of each factor collected during normal operation), the erroneous determination rate can be calculated. Alternatively, in a case where the time-series data of each factor over a predetermined period, including the occurrence of abnormality of which the time of occurrence of abnormality is found, is acquired, the number of days of advance prediction can be calculated. The evaluation unit 14 records the index Y in a case where the state evaluation such as the abnormality detection is performed using all the factors, in the storage unit 17.

Next, the evaluation unit 14 selects one un-evaluated factor in order from the factor having the smallest SN ratio gain (step S12). In the example of Fig. 5, the evaluation unit 14 first selects the factor 7. Next, the evaluation unit 14 executes the abnormality detection and the like excluding the selected factor, and calculates the index Y (step S13). For example, the evaluation unit 14 calculates the index Y in a case where the abnormality detection or the like is performed without using the factor 7, and records this value in the storage unit 17.

Next, the evaluation unit 14 compares the index Y calculated in a state where the selected factor is excluded with the index Y in a case where all the factors are used to determine whether or not there is a change (step S14). For example, the evaluation unit 14 determines that there is a change in a case where the difference between the indexes Y is equal to or greater than a predetermined threshold value, and determines that there is no change in a case where the difference between the indexes Y is less than the threshold value. In a case where the evaluation unit 14 determines that there is a change (step S14; Yes), the evaluation unit 14 regards the excluded factor (factor selected in step S12) as a "change point factor" that impacts on the determination of the abnormality detection or the like, and leaves this factor while recording the fact in the storage unit 17 (step S15). In a case where the evaluation unit 14 determines that there is no change (step S14; No), the evaluation unit 14 regards the excluded factor (factor selected in step S12) as a factor that does not impact on the abnormality detection or the like, records the fact in the storage unit 17, and deletes this factor from among the candidate factors (step S16). The deleted factor is not used in the subsequent evaluation process.

Next, the evaluation unit 14 calculates the index Y for all the factors serving as the candidates acquired in step S1, and determines whether or not the evaluation of whether or not the factor is a factor that impacts on the abnormality detection or the like (step S14) is performed (step S17). In a case where the evaluation unit 14 evaluates the index Y for all the factors (step S17; Yes), the evaluation unit 14 ends the evaluation process in Fig. 6.

In a case where the evaluation unit 14 does not evaluate the index Y for all the factors (step S17; No), the evaluation unit 14 repeats the processes after step S12. For example, after the evaluation for the factor 7 is ended, the evaluation unit 14 then selects the factor 3 (step S12) and calculates the index Y in a case where the factor 3 is excluded (step S13). Here, in a case where there is a factor deleted in the processes so far (step S16), the index Y is calculated excluding the factor and the factor to be evaluated this time. For example, in a case where the factor 7 is deleted (step S16), the abnormality detection or the like is performed in a state where the factor 7 and the factor 3 are excluded, and the index Y in that case is calculated. In a case where the factor 7 is left (step S15), the abnormality detection or the like is performed excluding only the factor 3 (factor 7 is used for abnormality detection or the like), and the index Y in that case is calculated. Next, the evaluation unit 14 determines whether or not there is a difference from the index Y in a case where all the factors are used (step S14). In a case where there is a difference, the factor 3 is regarded as a "change point factor" and is left (step S15), and in a case where there is no difference, the factor 3 is deleted as a factor that is not necessary for abnormality detection or the like (step S16). In a case where the factor 7 has already been deleted, in the determination in step S14, instead of the index Y in a case where all the factors are used, the index Y calculated by excluding the factor 7, that is, the index Y calculated in step S13 of the previous loop, may be compared with the index Y in a case where the factor 7 and the factor 3 are excluded, which is calculated this time. In a case where the degree of impact on the determination is individually evaluated for all the factors in this way, the evaluation unit 14 ends the process of step S6 in Fig. 2. Here, the process of Fig. 6 is performed for all factors, but the closer to the factor having the largest SN ratio gain, the more it may be clear that the remaining (un-evaluated) factors are factors that have an impact on the abnormality determination (in the above description, it was described that "the SN ratio gain is meaningful only in a combination of N factors", but it may be clear that the order of the factors does not change when really reaching the top factor or that there is no change that the factors are factors that impact on the determination even when the order changes). In such a case, the evaluation process may be ended in the middle thereof even when the evaluation for all the factors is not ended (un-evaluated factors remain as important factors). In this case, the process can be made efficient by performing the evaluation in order from the factor having the smallest SN ratio gain. By deleting the factor that is not the "change point factor", it is possible to reduce the calculation load since the calculation of the Mahalanobis distance, and the like can be performed without including this factor in the subsequent processes.

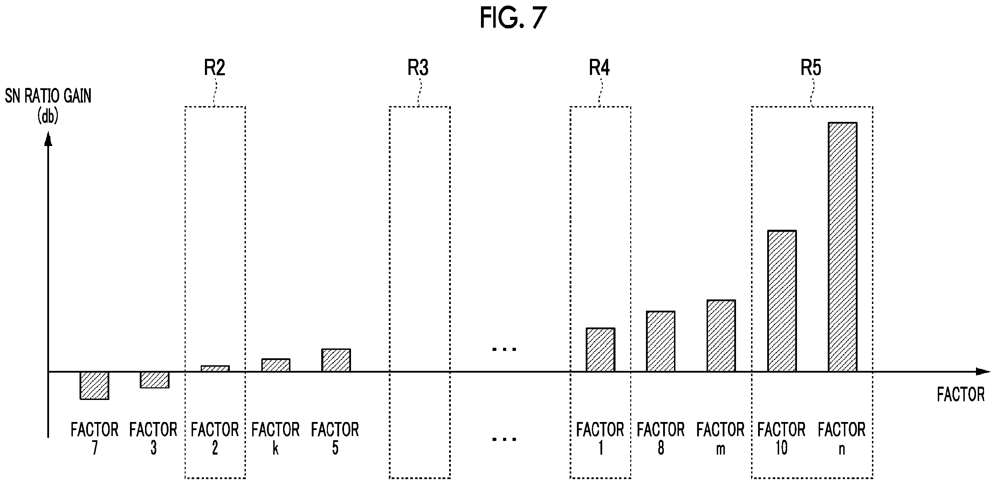

Returning to Fig. 2, the factor selection unit 15 selects the factor (factor regarded as the "change point factor") evaluated as having an impact in the evaluation process in step S6 (step S7). The output unit 16 outputs the selected factor. Fig. 7 shows an example of the factor selected in step S7. Factors included in ranges R2 to R5 of the diagram are the factors selected in step S7. Even the factor positioned at the top in order of magnitude of the SN ratio gain is not selected when the factor is not effective for the determination of the abnormality detection (for example, factor 8, factor m), and even in a case where the magnitude of the SN ratio gain of the factor is small, the factor is selected when the factor has an impact on the determination (for example, factor 2). As a result, the number of factors can be reduced as compared with the number of factors selected by the method in the related art (Fig. 5). For each factor, the factors that do not have an impact are deleted by actually performing the process such as the abnormality detection, and the remaining factors are selected, thus it is considered that the accuracy of the abnormality detection and the like can be maintained.

(Effects)

As described above, according to the present embodiment, it is possible to reduce the number of factors used for the determination of the state evaluation such as the abnormality detection while ensuring the accuracy of the state evaluation. As a result, processing costs related to the state evaluation, for example, the calculation of the unit space and the calculation of the Mahalanobis distance in a case of the MT method, and the calculation load such as the construction of the determination model, the determination based on the determination model, and the like in the case of the abnormality detection by the determination model constructed by machine learning or the like, can be suppressed, and the increase in the storage area of the data can be suppressed.

For example, a control device mounted on a device such as an air conditioner, a water heater, or a refrigerator performs abnormality detection in addition to the control of the device. Meanwhile, since there are constraints on the computer resources of these control devices, a large amount of data cannot be handled (stored) or a heavy-load process cannot be executed in many cases. On the other hand, by reducing the number of factors required for the abnormality detection using the factor selection method of the present embodiment, the control device can perform the abnormality detection by handling only a small number of factors. As described above, the present embodiment is suitable for a case where state evaluation such as abnormality detection is required to be performed by a computer that is relatively small and has limited computer resources due to a constraint on cost such as mass production or a constraint on a size, weight, or the like of a product.

In some cases, a device such as an air conditioner provided at each place and monitoring server are connected to each other via a network, and a measurement value of each factor is transmitted to the monitoring server to perform abnormality detection or the like by the monitoring server. However, as the number of devices to be monitored increases, the amount of data transmitted to the monitoring server and the amount of data stored on the monitoring server side are enormous. On the other hand, by reducing the number of factors using the factor selection method of the present embodiment, in addition to reducing the processing load of the abnormality detection on the monitoring server in the same manner as described above, it is possible to suppress the amount of data transmitted to the monitoring server and the amount of data stored on the monitoring server side. As described above, the present embodiment is suitable for a case where state evaluation such as abnormality detection is required to be performed by a computer having a large number of monitoring targets, such as remote monitoring.

(Modification Example 1)

In the above-described embodiment, the factor selection device 10 calculates the SN ratio gain, but the factor selection device 10 may be configured to acquire the SN ratio gain calculated by another device without calculating the SN ratio gain. A process in this case will be described with reference to the flowchart of Fig. 2. For example, the data acquisition unit 11 acquires the SN ratio gain of each factor calculated by another device in addition to the candidates for the factors (step S1'). Steps S2 to S4 are not performed, and the control unit 12 rearranges the factors in ascending order of the acquired SN ratio gain (step S5). Next, the evaluation unit 14 evaluates each factor (step S6), and the factor selection unit 15 selects an important factor (step S7). In the above-described embodiment and in the case of Modification Example 1, in the evaluation process of step S6, the evaluation may be performed in order from the factor having a largest SN ratio gain instead of performing the process in order from the factor having a smallest SN ratio gain.

(Modification Example 2)

In the above-described embodiment, the factor selection device 10 calculates the SN ratio gain, but the factor selection device 10 may evaluate each factor without calculating the SN ratio gain. A process in this case will be described with reference to the flowchart of Fig. 2. First, the data acquisition unit 11 acquires the candidates for the factors (step S1). Steps S2 to S5 are not performed, the evaluation unit 14 evaluates each factor (step S6), and the factor selection unit 15 selects an important factor (step S7). For example, in a case where the number of factors serving as candidates is small and it is not necessary to use the orthogonal array, the process described in Fig. 6 may be performed on all the factors without calculating the SN ratio gain.

(Modification Example 3)

In the above-described embodiment, the selection method of the factor used for calculating the Mahalanobis distance by the MT method has been described as an example. However, the factor selection method of the present embodiment can also be used for selecting the factor in a case where a determination model is constructed by machine learning and abnormality detection or the like is performed by the constructed determination model, that is, the training data used for constructing the determination model. For example, the factors can be selected by the method described above (Modification Example 2).

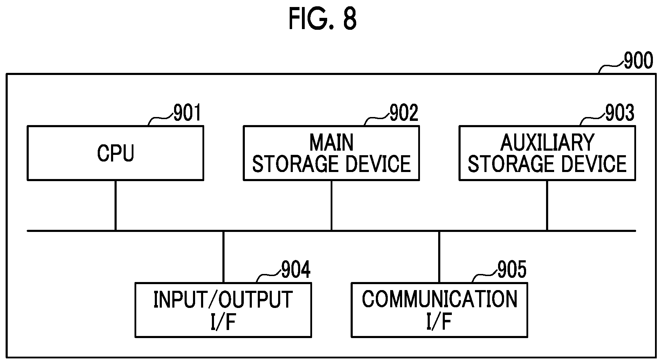

Fig. 8 is a diagram showing an example of a hardware configuration of the factor selection device according to the embodiment.

A computer 900 includes a CPU 901, a main storage device 902, an auxiliary storage device 903, an input/output interface 904, and a communication interface 905.

The factor selection device 10 is implemented in the computer 900. Each of the functions described above is stored in the auxiliary storage device 903 in the form of a program. The CPU 901 reads out the program from the auxiliary storage device 903, expands the program in the main storage device 902, and executes the above processing according to the program. The CPU 901 allocates a storage area in the main storage device 902 according to the program. The CPU 901 allocates a storage area for storing data being processed in the auxiliary storage device 903 according to the program.

By recording a program for realizing all or some of the functions of the factor selection device 10 on a computer-readable recording medium, and by reading the program recorded on the recording medium into a computer system and executing the read program, the processes by each functional unit may be performed. The "computer system" herein includes an OS and hardware such as a peripheral device. The "computer system" also includes a homepage providing environment (or display environment) when a WWW system is used. The "computer-readable recording medium" refers to a portable medium such as a CD, a DVD, or a USB, or a storage device such as a hard disk built into the computer system. In a case where the program is distributed to the computer 900 by a communication line, the computer 900 to which the program is distributed may expand the program in the main storage device 902 and execute the above processing. The above program may be for realizing a part of the above functions, or may further realize the above functions in combination with a program already recorded in the computer system.

As described above, some embodiments according to the present disclosure have been described, but all of these embodiments are presented as examples and are not intended to limit the scope of the invention. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention.

<Additional Notes>

The factor selection device, the factor selection method, and the program described in each of the embodiments are ascertained as follows, for example.

(1) A factor selection device according to a first aspect includes a data acquisition unit that acquires candidates for factors used for a state evaluation of an object, an evaluation unit that evaluates a magnitude of an impact on the state evaluation for each of the candidates, and a factor selection unit that selects a factor having a large impact from among the candidates based on an evaluation result of the evaluation unit, in which the evaluation unit selects one un-evaluated factor among the candidates, performs the state evaluation excluding the factor, and in a case where there is a change in accuracy of the state evaluation before and after excluding the factor, repeatedly executes an evaluation process for evaluating the factor as the factor having a large impact for each of the candidates, and the factor selection unit selects the factor evaluated as having a large impact.

As a result, the number of factors used for the state evaluation can be reduced without impairing the accuracy of the state evaluation.

(2) A factor selection device according to a second aspect is the factor selection device of (1), in which, in a case where there is no change in the accuracy of the state evaluation before and after excluding the factor, the evaluation unit deletes the factor from among the candidates and executes the evaluation process for remaining un-evaluated factors of the candidates.

The unnecessary factors are deleted, and the evaluation process for the remaining factors is performed, so that a calculation load can be reduced.

(3) A factor selection device according to a third aspect is the factor selection device of (1) or (2), and further includes an SN ratio gain calculation unit that calculates an SN ratio gain for each of the candidates, in which the evaluation unit performs the evaluation process in order from a candidate having a smallest SN ratio gain or in order from a candidate having a largest SN ratio gain.

As a result, the present embodiment is likely to be applied to a method of selecting a factor based on a magnitude relationship of the SN ratio gain, which is generally performed. With reference to the value of the SN ratio gain (for example, candidates with an overwhelmingly large SN ratio gain are excluded from the evaluation target), the evaluation process can be efficiently performed.

(4) A factor selection device according to a fourth aspect is the factor selection device of any one of (1) to (3), in which the state evaluation is to determine whether or not the object is in a predetermined state, and the evaluation unit calculates an erroneous determination rate of the determination as an index indicating the accuracy of the state evaluation, and evaluates a factor having a change in the erroneous determination rate as the factor having a large impact.

As a result, it is possible to find an important factor by the erroneous determination rate.

(5) A factor selection device according to a fifth aspect is the factor selection device of any one of (1) to (4), in which the state evaluation is to predict that the object is in a predetermined state, the evaluation unit calculates how long ago it was predictable that the object would be in the predetermined state in a determination of the accuracy of the state evaluation, as an index of the accuracy, and in a case where there is a change in the index, determines the factor as the factor having a large impact.

As a result, it is possible to find an important factor by the number of days of advance prediction.

(6) A factor selection device according to a sixth aspect includes a data acquisition unit that acquires SN ratio gains of candidates for factors used for a state evaluation of an object, a rearrangement unit that rearranges the factors in ascending order of the SN ratio gains, an evaluation unit that evaluates a magnitude of an impact on the state evaluation for each of the candidates, and a factor selection unit that selects a factor having a large impact from among the candidates based on an evaluation result of the evaluation unit, in which the evaluation unit selects one of the factors in order from a candidate having a smallest SN ratio gain or in order from a candidate having a largest SN ratio gain, performs the state evaluation excluding the factor, and in a case where there is a change in accuracy of the state evaluation before and after excluding the factor, repeatedly executes an evaluation process for evaluating the factor as the factor having a large impact, and the factor selection unit selects the factor evaluated as having a large impact.

As a result, the present embodiment is likely to be applied to a method of selecting a factor based on a magnitude relationship of the SN ratio gain, which is generally performed. With reference to the value of the SN ratio gain (for example, candidates with an overwhelmingly large SN ratio gain are excluded from the evaluation target), the evaluation process can be efficiently performed.

(7) A factor selection method according to a seventh aspect includes a step of acquiring candidates for factors used for a state evaluation of an object, a step of evaluating a magnitude of an impact on the state evaluation for each of the candidates, and a step of selecting a factor having a large impact from among the candidates based on an evaluation result of the step of evaluating, in which in the step of evaluating, one un-evaluated factor among the candidates is selected, the state evaluation is performed excluding the factor, and in a case where there is a change in accuracy of the state evaluation before and after excluding the factor, an evaluation process for evaluating the factor as the factor having a large impact is repeatedly executed for each of the candidates, and, in the step of selecting, the factor evaluated as having a large impact is selected.

(8) A program according to an eighth aspect causes a computer to execute a process including a step of acquiring candidates for factors used for a state evaluation of an object, a step of evaluating a magnitude of an impact on the state evaluation for each of the candidates, and a step of selecting a factor having a large impact from among the candidates based on an evaluation result of the step of evaluating, in which in the step of evaluating, one un-evaluated factor among the candidates is selected, the state evaluation is performed excluding the factor, and in a case where there is a change in accuracy of the state evaluation before and after excluding the factor, an evaluation process for evaluating the factor as the factor having a large impact is repeatedly executed for each of the candidates, and, in the step of selecting, the factor evaluated as having a large impact is selected.

Industrial Applicability

According to the factor selection device, the factor selection method, and the program, it is possible to reduce factors used for abnormality detection and the like. Reference Signs List

10:     factor selection device
11:     data acquisition unit
12:     control unit
13:     SN ratio gain calculation unit
14:     evaluation unit
15:     factor selection unit
16:     output unit
17:     storage unit
900:    computer
901:    CPU
902:    main storage device
903:    auxiliary storage device
904:    input/output interface
905:    communication interface

**Claims**

1.  A factor selection device comprising:

    a data acquisition unit that acquires candidates for factors used for a state evaluation of an object;
    an evaluation unit that evaluates a magnitude of an impact on the state evaluation for each of the candidates; and
    a factor selection unit that selects a factor having a large impact from among the candidates based on an evaluation result of the evaluation unit,
    wherein the evaluation unit selects one un-evaluated factor among the candidates, performs the state evaluation excluding the factor, and in a case where there is a change in accuracy of the state evaluation before and after excluding the factor, repeatedly executes an evaluation process for evaluating the factor as the factor having a large impact for each of the candidates, and
    the factor selection unit selects the factor evaluated as having a large impact.

2.  The factor selection device according to Claim 1,
    wherein, in a case where there is no change in the accuracy of the state evaluation before and after excluding the factor, the evaluation unit deletes the factor from among the candidates and executes the evaluation process for remaining un-evaluated factors of the candidates.

3.  The factor selection device according to Claim 1 or 2, further comprising:

    an SN ratio gain calculation unit that calculates an SN ratio gain for each of the candidates,
    wherein the evaluation unit performs the evaluation process in order from a candidate having a smallest SN ratio gain or in order from a candidate having a largest SN ratio gain.

4.  The factor selection device according to Claim 1 or 2,

    wherein the state evaluation is to determine whether or not the object is in a predetermined state, and
    the evaluation unit calculates an erroneous determination rate of the determination as an index indicating the accuracy of the state evaluation, and evaluates a factor having a change in the erroneous determination rate as the factor having a large impact.

5.  The factor selection device according to Claim 1 or 2,

    wherein the state evaluation is to predict that the object is in a predetermined state,
    the evaluation unit calculates how long ago it was predictable that the object would be in the predetermined state in a determination of the accuracy of the state evaluation, as an index of the accuracy, and in a case where there is a change in the index, evaluates the factor as the factor having a large impact.

6.  A factor selection device comprising:

    a data acquisition unit that acquires SN ratio gains of candidates for factors used for a state evaluation of an object;
    a rearrangement unit that rearranges the candidates in ascending order of the SN ratio gains;
    an evaluation unit that evaluates a magnitude of an impact on the state evaluation for each of the candidates; and
    a factor selection unit that selects a factor having a large impact from among the candidates based on an evaluation result of the evaluation unit,
    wherein the evaluation unit selects one of the factors in order from a candidate having a smallest SN ratio gain or in order from a candidate having a largest SN ratio gain, performs the state evaluation excluding the factor, and in a case where there is a change in accuracy of the state evaluation before and after excluding the factor, repeatedly executes an evaluation process for evaluating the factor as the factor having a large impact, and
    the factor selection unit selects the factor evaluated as having a large impact.

7.  A factor selection method comprising:

    a step of acquiring candidates for factors used for a state evaluation of an object;
    a step of evaluating a magnitude of an impact on the state evaluation for each of the candidates; and
    a step of selecting a factor having a large impact from among the candidates based on an evaluation result of the step of evaluating,

wherein in the step of evaluating, one un-evaluated factor among the candidates is selected, the state evaluation is performed excluding the factor, and in a case where there is a change in accuracy of the state evaluation before and after excluding the factor, an evaluation process for evaluating the factor as the factor having a large impact is repeatedly executed for each of the candidates, and,

in the step of selecting, the factor evaluated as having a large impact is selected.

8. A program causing a computer to execute a process comprising:

a step of acquiring candidates for factors used for a state evaluation of an object;

a step of evaluating a magnitude of an impact on the state evaluation for each of the candidates; and

a step of selecting a factor having a large impact from among the candidates based on an evaluation result of the step of evaluating,

wherein in the step of evaluating, one un-evaluated factor among the candidates is selected, the state evaluation is performed excluding the factor, and in a case where there is a change in accuracy of the state evaluation before and after excluding the factor, an evaluation process for evaluating the factor as the factor having a large impact is repeatedly executed for each of the candidates, and,

in the step of selecting, the factor evaluated as having a large impact is selected.

## FIG. 1

~10

**FACTOR SELECTION DEVICE**

~11

DATA ACQUISITION UNIT

~12

**CONTROL UNIT**

~13

SN RATIO GAIN
CALCULATION UNIT

~14

EVALUATION UNIT

~15

FACTOR
SELECTION UNIT

~16

OUTPUT UNIT

~17

STORAGE UNIT

# FIG. 2

```
        ┌─────────────┐
        │    START    │
        └──────┬──────┘
               │                         ⌐S1
        ┌──────▼──────────────────────┐
        │ ACQUIRE CANDIDATES FOR FACTORS│
        └──────┬──────────────────────┘
               │                         ⌐S2
        ┌──────▼──────────────────────┐
        │      ALLOCATE FACTORS        │
        │   TO ORTHOGONAL ARRAY        │
        └──────┬──────────────────────┘
               │                         ⌐S3
        ┌──────▼──────────────────────┐
        │     CALCULATE SN RATIO OF    │
        │    MAHALANOBIS DISTANCE      │
        └──────┬──────────────────────┘
               │                         ⌐S4
        ┌──────▼──────────────────────┐
        │    CALCULATE SN RATIO GAIN   │
        └──────┬──────────────────────┘
               │                         ⌐S5
        ┌──────▼──────────────────────┐
        │ ARRANGE FACTORS IN ASCENDING │
        │    ORDER OF SN RATIO GAIN    │
        └──────┬──────────────────────┘
               │                         ⌐S6
        ┌──────▼──────────────────────┐
        │      EVALUATE EACH FACTOR    │
        └──────┬──────────────────────┘
               │                         ⌐S7
        ┌──────▼──────────────────────┐
        │  SELECT FACTOR EVALUATED AS  │
        │      HAVING IMPACT           │
        └──────┬──────────────────────┘
               │
        ┌──────▼──────┐
        │     END     │
        └─────────────┘
```

FIG. 3

| | FACTOR 1 | FACTOR 2 | FACTOR 3 | FACTOR 4 | $\cdots$ | FACTOR m | MD OF ABNORMAL DATA | | | SN RATIO |
|---|---|---|---|---|---|---|---|---|---|---|
| 1 | 1 | 1 | 1 | 1 | $\cdots$ | 1 | $\cdots$ | $\cdots$ | $\cdots$ | $\eta 1$ |
| 2 | 1 | 1 | 1 | 1 | $\cdots$ | 2 | $\cdots$ | $\cdots$ | $\cdots$ | $\eta 2$ |
| 3 | 1 | 1 | 2 | 2 | $\cdots$ | 2 | $\cdots$ | $\cdots$ | $\cdots$ | $\eta 3$ |
| 4 | 1 | 2 | 1 | 2 | $\cdots$ | 2 | $\cdots$ | $\cdots$ | $\cdots$ | $\eta 4$ |
| 5 | 1 | 2 | 2 | 2 | $\cdots$ | 1 | $\cdots$ | $\cdots$ | $\cdots$ | $\eta 5$ |
| 6 | 1 | 2 | 2 | 2 | $\cdots$ | 1 | $\cdots$ | $\cdots$ | $\cdots$ | $\eta 6$ |
| 7 | 2 | 1 | 2 | 2 | $\cdots$ | 1 | $\cdots$ | $\cdots$ | $\cdots$ | $\eta 7$ |
| 8 | 2 | 1 | 2 | 1 | $\cdots$ | 2 | $\cdots$ | $\cdots$ | $\cdots$ | $\eta 8$ |
| 9 | 2 | 1 | 1 | 2 | $\cdots$ | 1 | $\cdots$ | $\cdots$ | $\cdots$ | $\eta 9$ |
| 10 | 2 | 2 | 2 | 1 | $\cdots$ | 2 | $\cdots$ | $\cdots$ | $\cdots$ | $\eta 10$ |
| 11 | 2 | 2 | 1 | 2 | $\cdots$ | 2 | $\cdots$ | $\cdots$ | $\cdots$ | $\eta 11$ |
| 12 | 2 | 2 | 1 | 1 | $\cdots$ | 1 | $\cdots$ | $\cdots$ | $\cdots$ | $\eta 12$ |

FIG. 4

EP 4 571 539 A1

# FIG. 5

EP 4 571 539 A1

FIG. 6

START

S11
EXECUTE ABNORMALITY
DETECTION OR LIKE USING ALL
FACTORS AND CALCULATE
INDEX Y

S12
SELECT ONE UN-EVALUATED
FACTOR

S13
EXECUTE ABNORMALITY
DETECTION OR LIKE EXCLUDING
SELECTED FACTOR AND
CALCULATE INDEX Y

S14
IS THERE CHANGE? —NO→

S16
DELETE FACTOR

YES

S15
LEAVE FACTOR

S17
IS INDEX Y
EVALUATED FOR ALL
FACTORS?

NO

YES

END

FIG. 7

EP 4 571 539 A1

FIG. 8

## INTERNATIONAL SEARCH REPORT

| International application No. |
| --- |
| **PCT/JP2023/029601** |

| A. | CLASSIFICATION OF SUBJECT MATTER |
| --- | --- |

*G06F 18/2115*(2023.01)i
FI:  G06F18/2115

According to International Patent Classification (IPC) or to both national classification and IPC

| B. | FIELDS SEARCHED |
| --- | --- |

Minimum documentation searched (classification system followed by classification symbols)

G06F18/00-18/40; G06Q10/04; G06N20/00; G06N3/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2009-86706 A (FUJITSU LTD.) 23 April 2009 (2009-04-23)<br>    paragraphs [0013]-[0145], [0259]-[0264] | 1-8 |
| Y | 神田直之 ほか, マルチドメイン音声対話システムにおける対話履歴を利用したドメイン選択, 情報処理学会論文誌, 15 May 2007, vol. 48, no. 5, p. 1980-1989 non-official translation (KANDA, Naoyuki et al. Domain selection that uses dialogue history in multi-domain speech dialogue system. IPSJ paper.)<br>    p. 1984 | 1-8 |
| Y | JP 2009-274588 A (MITSUBISHI HEAVY INDUSTRIES, LTD.) 26 November 2009 (2009-11-26)<br>    paragraphs [0093]-[0104], fig. 11 | 3, 6 |
| Y | JP 2019-8369 A (RICOH CO., LTD.) 17 January 2019 (2019-01-17)<br>    paragraphs [0039], [0089] | 4-5 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/029601**

| Patent document cited in search report | | | Publication date (day/month/year) | Patent family member(s) | Publication date (day/month/year) |
|---|---|---|---|---|---|
| JP | 2009-86706 | A | 23 April 2009 | US 2009/0089023 A1 paragraphs [0010]-[0196], [0313]-[0319] | |
| JP | 2009-274588 | A | 26 November 2009 | (Family: none) | |
| JP | 2019-8369 | A | 17 January 2019 | (Family: none) | |

Form PCT/ISA/210 (patent family annex) (January 2015)

**EP 4 571 539 A1**

**Patent documents cited in the description**

- JP 2022131699 A
- JP 2008117380 A
- JP 2009243428 A